# EUROPÄISCHE PATENTANMELDUNG

(11) **EP 1 600 676 A1**
(43) Veröffentlichungstag der Anmeldung: **30.11.2005**
(21) Anmeldenummer: 05010299.5
(22) Anmeldetag: 12.05.2005
(51) Int. Cl.: F16K 15/14, F25D 21/14

(54) **Tauwasserablaufventil**

(30) Priorität: 28.05.2004 DE 102004026261
(71) Anmelder: Liebherr-Hausgeräte Ochsenhausen GmbH, 88416 Ochsenhausen (DE)
(72) Erfinder: Heckenberger, Bernd, 88416 Reinstetten (DE); Schropp, Christian, 87776 Attenhausen (DE)
(74) Vertreter: Laufhütte, Dieter

(57) **Zusammenfassung**

Die Erfindung betrifft ein Tauwasserablaufventil für Kühl- und/oder Gefriergeräte, das aus elastischem Material besteht, einen schlauchförmigen Bereich (1) umfaßt, an einem offenen, ersten Ende eine erste Öffnung zur Verbindung mit einem Tauwasserablauf umfaßt, und an einem zweiten Ende eine den Durchfluß steuernde zweite Öffnung aufweist. Erfindungsgemäß ist vorgesehen, daß das zweite Ende durch eine mit dem schlauchförmigen Bereich (1) einstückige Abschlußwand (2) gebildet ist und die zweite Öffnung durch zumindest einen Schlitz (3) in der Abschlußwand (2) gebildet wird. Die Erfindung betrifft weiterhin ein Kühl- und/oder Gefriergerät mit einem erfindungsgemäßen Tauwasserablaufventil.

## Beschreibung

Die Erfindung betrifft ein Tauwasserablaufventil für Kühl- und/oder Gefriergeräte, das aus elastischem Material besteht, einen schlauchförmigen Bereich aufweist, zur Verbindung mit einem Tauwasserablauf an einem ersten, offenen Ende eine erste Öffnung aufweist und an einem zweiten Ende eine den Durchfluß steuernde zweite Öffnung aufweist, mit den Merkmalen des Oberbegriffes des Anspruches 1. Die Erfindung betrifft weiterhin ein Kühl- und/oder Gefriergerät mit einem Tauwasserablaufventil und eine Verwendung eines Elementes aus elastischem Material mit einem im wesentlichen schlauchförmigen Bereich.

In Kühlgeräten oder Gefriergeräten fällt während manuell eingeleiteter oder automatischer Abtauvorgänge innerhalb der Kühl- bzw. Gefrierkammer Tauwasser an, das z. B. in eine Verdunstungsschale außerhalb der Kühl- bzw. Gefrierkammer abgegeben werden muß. Gleichzeitig muß sichergestellt werden, daß durch den Tauwasserablauf in umgekehrter Richtung keine Luft, andere Gase oder Geruchsbelästigungen z. B. von der Tauwasserauffangschale in den Kühl- oder Gefrierraum gelangen. Speziell beim Öffnen der Gerätetür entsteht im Kühl- bzw. Gefrierraum ein kurzzeitiger Unterdruck, der zu unerwünschtem Ansaugen von Luft oder anderen Gasen durch das Tauwasserablaufventil in umgekehrter Richtung führen könnte. Eine Anordnung des Standes der Technik sieht daher am Tauwasserablauf eine aufwendige siphonartige Konstruktion vor, die ggf. eine zusätzliche Gummilippe in einem Bereich des Tauwasserweges durch den Siphon aufweist und einen luftdichten Abschluß bildet.

Eine andere Anordnung des Standes der Technik ist in den Figuren 10 bis 12 gezeigt. Ein aus elastischem Material bestehendes Aufsatzstück 110 wird von unten auf das nach unten weisende Ende eines Tauwasserablaufrohres gesteckt. Dazu dient das Mundstück 114, das durch einen Ansatz 116 begrenzt wird. An dem dem Mundstück 114 gegenüberliegenden Teil des Aufsatzstückes 110 befinden sich zwei aneinanderliegende Membranen 112, ebenfalls aus elastischem Material. In Figur 10 ist eine Draufsicht auf ein entsprechendes Element des Standes der Technik gezeigt. Figur 11 zeigt eine seitliche Ansicht in Blickrichtung XI, wie sie in Figur 10 angedeutet ist. Schließlich zeigt Figur 12 eine Ansicht in Richtung XII, wie sie in Figuren 10 und 11 angedeutet ist. In Figur 12 erkennt man die zwei aneinanderliegenden Membranen 112 mit dem Bereich 118 dazwischen. Wird ein solches Aufsatzstück 110 mit dem Mundstück 114 von unten auf ein Tauwasserablaufrohr eines Kühl- und/oder Gefriergerätes gesteckt, so kann das Tauwasser durch das Mundstück 114 zwischen den Membranen 112 hindurch nach unten austreten. Die Flußrichtung ist mit A bezeichnet. Fällt gerade kein Tauwasser an, so liegen die Membranen 112 aneinander und verschließen so das Aufsatzstück 110 und verhindern in der Regel das Eintreten von Luft oder Gasen in entgegengesetzter Richtung.

Zwischen den aneinanderliegenden Membranen 112 sammeln sich ggf. Schmutzpartikel, die einen sicheren Verschluß durch Aneinanderliegen der beiden Membranen 112 verhindern können. Ein Abschluß gegen rückströmendes Gas oder Luft durch das Aufsatzstück 110 ist damit nicht mehr gewährleistet.

Ausgehend von diesem Stand der Technik ist es die Aufgabe der vorliegenden Erfindung, eine verbesserte Vorrichtung anzugeben, mit der der Gas- bzw. Luftrückstrom in den Kühl- bzw. Gefrierraum wirksam verhindert werden kann, und die einfach und kostengünstig realisierbar ist.

Diese Aufgabe wird mit einem Tauwasserablaufventil mit den Merkmalen des Anspruches 1 bzw. einem Kühl- und/oder Gefriergerät mit den Merkmalen des Anspruches 12 gelöst. Vorteilhafte Ausgestaltungen sind Gegenstand der Unteransprüche. Anspruch 13 ist auf die Verwendung eines entsprechenden Elementes als Tauwasserablaufventil für ein Kühl- und/oder Gefriergerät gerichtet.

Das erfindungsgemäße Tauwasserablaufventil weist an seinem zweiten, also dem im Betrieb dem Tauwasserablaufrohr entfernten Ende, eine Abschlußwand auf. Die zweite Öffnung, durch die das Tauwasser aus dem erfindungsgemäßen Tauwasserablaufventil ablaufen kann, wird durch zumindest einen Schlitz in der Abschlußwand gebildet.

Das erfindungsgemäße Tauwasserablaufventil läßt sich auf einfache Weise mit dem Tauwasserablauf verbinden. Besteht dieser z. B. aus einem Tauwasserablaufrohr, so kann das erfindungsgemäße Tauwasserablaufventil mit dem ersten offenen Ende direkt von unten auf das Tauwasserablaufrohr aufgesteckt werden. Bei schlauchartigen Tauwasserabläufen wird das erfindungsgemäße Tauwasserablaufventil auf den Schlauch aufgesteckt.

Anfallendes Tauwasser fließt in das erfindungsgemäße Tauwasserablaufventil. Erst bei ausreichender Gewichtsbelastung des Tauwassers auf der nach unten weisenden Abschlußwand öffnet sich der zumindest eine Schlitz durch die Gewichtskraft des darüber befindlichen Tauwassers. Schlagartig fließt das angefallene Tauwasser durch den zumindest einen aufgegangenen Schlitz ab und spült ggf. Verunreinigungen automatisch schwungartig aus dem Tauwasserablaufventil mit aus. Ist das Tauwasser abgelaufen, schließt sich der zumindest eine Schlitz aufgrund der elastischen Eigenschaften selbsttätig wieder. Durch die schlitzartige Ausgestaltung wird vermieden, daß größere Flächen, wie z. B. Membranen bei den Tauwasserablaufventilen des Standes der Technik, aneinanderliegen müssen, um einen sicheren Abschluß zu bilden. Die Gefahr, daß sich zwischen den das Tauwasserablaufventil abschließenden Elementen Schmutzpartikel sammeln, wird also effektiv verkleinert.

Die Abschlußwand kann an dem schlauchförmigen Bereich des Tauwasserablaufventils befestigt, z. B. festgeklebt sein und aus demselben Material wie der schlauchförmige Bereich bestehen. Eine besonders einfach herzustellende und kostengünstige Ausführungsform sieht vor, daß die Abschlußwand und der schlauchförmige Bereich aus einem Stück gefertigt sind. So ist die Abschlußwand leicht in einem Prozeß zusammen mit dem schlauchförmigen Bereich herstellbar und muß nur geschlitzt werden.

Die Abschlußwand kann über einen einzelnen Schlitz z. B. in zentraler Anordnung verfügen. Eine solche Ausführungsform ist sicher, einfach herstellbar und robust.

Eine andere Ausführungsform sieht eine Abschlußwand mit zwei Schlitzen vor, die vorzugsweise aufeinander senkrecht stehen. Eine solche Ausführungsform erweist sich als für die üblicherweise im Tauwasserablauf eines Kühl- und/oder Gefriergerätes anfallenden Tauwassermengen als besonders geeignet und ist ebenso sicher und einfach herstellbar.

Sind mehrere Schlitze vorgesehen, so können diese alle die gleiche Tiefe haben. Überraschenderweise hat sich als besonders effektiv eine Anordnung herausgestellt, bei der die Schlitze unterschiedlich tief in die Abschlußwand hinein reichen. So kann z. B. ein Schlitz eine Tiefe haben, die größer ist als die Ausdehnung der Abschlußwand in einer Richtung parallel zur Längsausdehnung des schlauchförmigen Bereiches. Ein zweiter Schlitz kann eine geringere Tiefe als die Ausdehnung der Abschlußwand in einer Richtung parallel zur Längsausdehnung des schlauchförmigen Bereiches haben. Eine solche Ausgestaltung stellt einen optimalen Kompromiß aus den Stabilitätsanforderungen einerseits und den Durchflußanforderungen andererseits dar.

Der schlauchförmige Bereich kann grundsätzlich unterschiedliche Querschnitte haben. Besonders vorteilhaft ist ein zylinderförmiger schlauchförmiger Bereich, da dieser an bekannte Tauwasserablaufrohrstutzen leicht aufsetzbar ist und eine symmetrische Belastung der Abschlußwand gewährleistet.

Besonders vorteilhaft ist es, wenn die Abschlußwand einen Bereich umfaßt, der eine Wandstärke aufweist, die geringer ist als die Wandstärke des schlauchförmigen Bereiches. Auf diese Weise bleibt die Stabilität des schlauchförmigen Bereiches erhalten und gleichzeitig wird der Bereich, in dem die Seiten des Schlitzes aneinander stoßen, möglichst gering gehalten. Die Gefahr, daß sich in diesem Bereich Schmutzpartikel im Schlitz aufhalten und so einen sicheren Verschluß verhindern, wird dadurch weiter verringert.

Die Abschlußwand kann unterschiedliche Formen aufweisen. Zum Beispiel weist eine Ausführungsform eine Abschlußwand in Form eines Kegelstumpfes mit einer runden Spitze auf. Auf die schräge Wand der Mantelfläche des Kegelstumpfes wirkt eine höhere Kraft des Wasserdrucks.

Eine besonders einfach herstellbare und aufgrund der Symmetrieverhältnisse günstige Ausgestaltung weist eine halbkugelförmige Abschlußwand auf.

Der zumindest eine Schlitz kann in der Abschlußwand schräg angeordnet sein, wenn es z. B. die äußeren Umstände des Tauwasserablaufbereiches des Kühl- und/oder Gefriergerätes erfordern. Eine sichere Ausgestaltung mit nach unten weisender Tauwasserablaufrichtung und einfacher Herstellgeometrie wird durch zumindest einen Schlitz gebildet, der sich in einer Richtung erstreckt, die parallel zur Längsausdehnung des schlauchförmigen Bereiches ist.

Für das erfindungsgemäße Tauwasserablaufventil eignen sich verschiedene elastische Materialien, z. B. Gummi oder Materialien auf Silikonbasis. Die Shore-Härte kann z. B. im Bereich von 35 bis 55 gewählt werden.

Unabhängiger Schutz wird für ein Kühl- und/oder Gefriergerät mit einem erfindungsgemäßen Tauwasserablaufventil beansprucht.

Ein weiterer Aspekt der Erfindung ist auf die Verwendung eines Elementes aus elastischem Material mit einem im wesentlichen schlauchförmigen Bereich, einem ersten, offenen Ende zur Verbindung mit einem Rohr oder Schlauch, einem zweiten Ende mit einer mit dem schlauchförmigen Bereich einstückig ausgebildeten Abschlußwand und zumindest einem Schlitz in der Abschlußwand, als Tauwasserablaufventil für ein Kühl- und/oder Gefriergerät gerichtet. Die Vorteile der Verwendung eines solchen Elementes als Tauwasserablaufventil ergeben sich aus den oben bereits geschilderten Vorteilen des erfindungsgemäßen Tauwasserablaufventils. Besonders vorteilhaft ist die Verwendung eines in analoger Weise zu den besonderen Ausführungsformen des erfindungsgemäßen Tauwasserablaufventils weitergebildeten Elementes.

Eine Ausführungsform des erfindungsgemäßen Tauwasserablaufventils wird anhand der beiliegenden Figuren 1 bis 9 im Detail erläutert. Es zeigen:
- Figur 1:: einen seitlichen Querschnitt durch eine erste Ausführungsform eines erfindungsgemäßen Tauwasserablaufventils,
- Figur 2:: eine Querschnittsansicht entlang der Ebene II-II der Figur 1,
- Figur 3:: eine seitliche Draufsicht auf diese Ausführungsform in der in Figur 1 angegebenen Blickrichtung III,
- Figur 4:: eine seitliche Draufsicht auf eine zweite Ausführungsform eines erfindungsgemäßen Tauwasserablaufventils,
- Figur 5:: eine seitliche Draufsicht auf die zweite Ausführungsform in der in Figur 4 angegebenen Blickrichtung V,
- Figur 6:: eine Ansicht des Tauwasserablaufventils dieser Ausführungsform schräg von unten,
- Figur 7:: eine Querschnittsansicht durch diese Ausführungsform entlang der Ebene VII-VII der Figur 4,
- Figur 8:: eine seitliche Schnittansicht einer dritten Ausführungsform eines erfindungsgemäßen Tauwasserablaufventils,
- Figur 9:: eine seitliche Draufsicht auf die dritte Ausführungsform in der in Figur 8 angegebenen Blickrichtung IX,
- Figur 10:: eine seitliche Ansicht eines Tauwasserablaufventils des Standes der Technik,
- Figur 11:: eine andere Seitenansicht des Tauwasserablaufventils des Standes der Technik in der in Figur 10 angegebenen Blickrichtung XI, und
- Figur 12:: eine Vorderansicht des Tauwasserablaufventils des Standes der Technik in der in Figuren 10 und 11 angegebenen Blickrichtung XII.

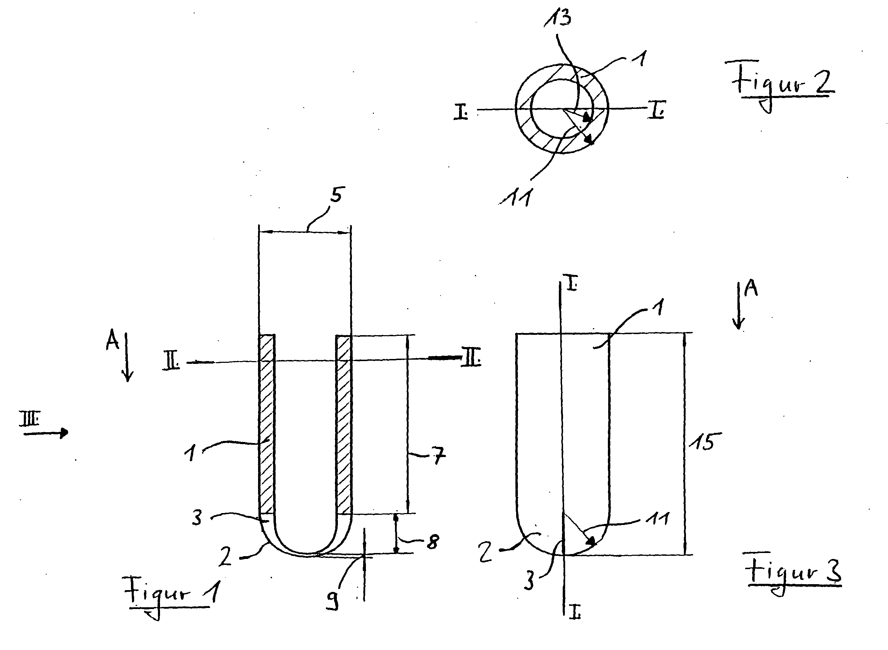

Figur 1 zeigt den Querschnitt durch eine Ausführungsform des Ventils. Es ist aus elastischem Material auf Silikonbasis gebildet und umfaßt den schlauchförmigen Bereich 1, an den sich ein halbkugelförmiger Abschluß 2 anschließt. Während die Wandstärke des schlauchförmigen Bereiches 1 2mm beträgt, verjüngt sich die Wandstärke 9 in der halbkugelförmigen Abschlußwand 2 auf 0,5 mm. Der halbkugelförmige Bereich weist einen Radius 8 auf, der z. B. 6 mm beträgt. Der schlauchförmige Bereich 7 ist bei der gezeigten Ausführungsform 24 mm. Der Durchmesser des schlauchförmigen Bereiches, der mit 5 bezeichnet ist, beträgt bei der Ausführungsform 12 mm. Die Flußrichtung des Tauwassers ist mit A bezeichnet.

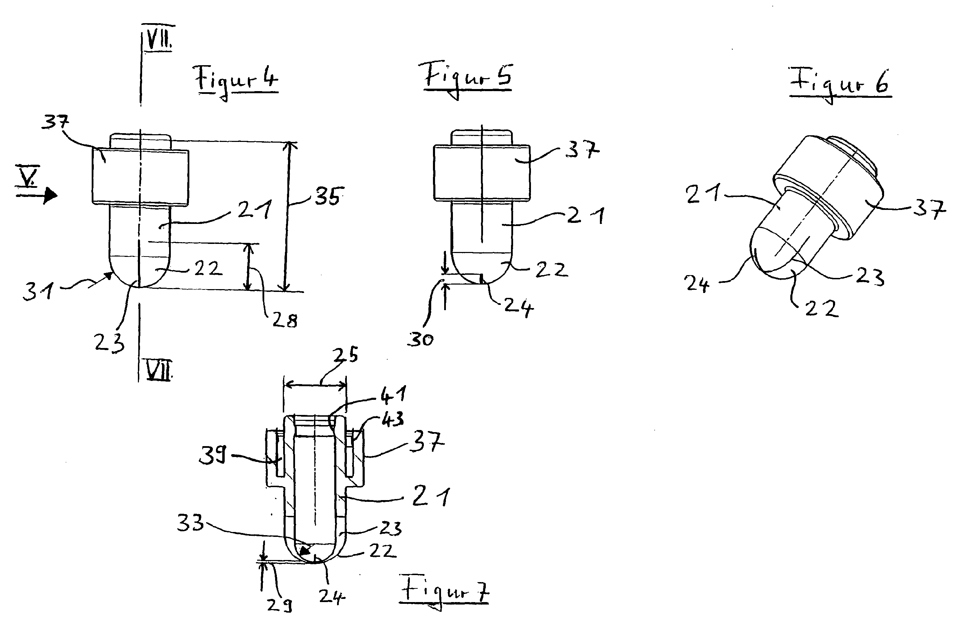

Figur 2 zeigt die Ansicht des Querschnittes, der in Figur 1 mit II bezeichnet ist. Man erkennt in Figur 2 den schlauchförmigen Bereich 1 mit einem Außenradius 11, der hier 6 mm beträgt, und dem Innenradius 13, der 4 mm beträgt. Die Ebene I in Figur 2 entspricht der Schnittebene, die in Figur 1 sichtbar ist.

Figur 3 zeigt schließlich eine seitliche Draufsicht der Ausführungsform in Blickrichtung III, wie sie in Figur 1 angedeutet ist. Insbesondere erkennt man, daß der halbkugelförmige Bereich 2 denselben Radius 11 wie der schlauchförmige Bereich 1 aufweist. Die Gesamtlängenausdehnung 15 beträgt bei dieser Ausführungsform 30 mm entsprechend der Summe der in Figur 1 angegebenen Maße 7 (24 mm) und 8 (6 mm). In Figur 3 ist ebenfalls die Ebene I angegeben, die der Schnittebene der Figur 1 entspricht. In der Schnittebene I befindet sich der Schlitz 3, der in der Abschlußwand 2 gebildet ist und mit einer Tiefe 8 gebildet ist.

Das Tauwasserablaufventil wird mit dem oberen offenen Ende von unten auf ein nicht gezeigtes Tauwasserablaufrohr aufgesteckt. Das Ventil haftet durch Selbstklemmung.

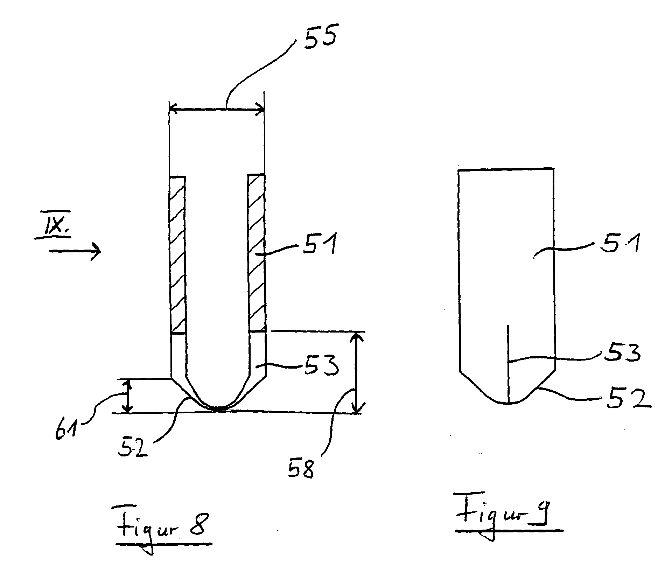

In Figur 4 ist eine Ausführungsform mit zwei kreuzförmig angeordneten Schlitzen 23 und 24 dargestellt. In der seitlichen Draufsicht der Figur 4 ist mit V die in Figur 5 erkennbare Blickrichtung angedeutet. Während Figur 6 eine Ansicht schräg von unten zeigt, ist in Figur 7 ein Schnitt dargestellt, der in Figur 4 mit VII bezeichnet ist. Der schlauchförmige Bereich 21 geht im unteren Bereich in eine Abschlußwand 22 über. Die gesamte Anordnung hat eine Länge 35 von z. B. 29 mm. Der äußere Radius 31 der halbkugelförmigen Abschlußwand 22 beträgt bei dieser Ausführungsform 6 mm. Der eine Schlitz 23 erstreckt sich mit einer Tiefe 28 von 10 mm, ist also länger als die Dimension der Abschlußwand 22 in Richtung der Längsausrichtung des schlauchförmigen Bereiches 21, die dem Radius 31 von 6 mm entspricht.

Der zweite Schlitz 24 hat eine Länge 30 von 2 mm, ist also kürzer als die Ausdehnung der Abschlußwand 22 in Längsausrichtung des schlauchförmigen Bereiches 21, die dem Radius 31 von 6 mm entspricht. Der in Figur 7 angedeutete innere Radius 33 der Abschlußwand 22 ist bei dieser Ausführungsform z. B. zu 4 mm und der äußere Durchmesser 25 des schlauchförmigen Bereiches 21 ist zu 12 mm gewählt. Die Wandstärke des schlauchförmigen Bereiches 21 ergibt sich daher zu 2 mm. Die Membranstärke 29 im unteren Bereich der Abschlußwand 22 ist 0,3 mm. Das elastische Material der Ausführungsform ist auf Silikonbasis und hat eine Shore-Härte von 45.

Innerhalb der Öffnung des schlauchförmigen Bereiches 21 befindet sich ein etwa 0,3 mm nach innen reichender Wulst 41, der beim Aufstecken auf ein Tauwasserablaufrohr die Selbstklemmung des Tauwasserablaufventils beim Aufstecken auf ein Tauwasserablaufrohr verstärkt.

Für dieses Ausführungsbeispiel ist als zusätzliche Befestigungsmöglichkeit der Kragen 37 dargestellt, der ebenfalls aus demselben Material wie das übrige Tauwasserablaufventil hergestellt ist. Zwischen Kragen 37 und dem schlauchförmigen Bereich 21 ist eine Nut 39 gebildet. Innerhalb der Nut 39 befindet sich ein z. B. ein 0,3 mm dicker Wulst 43. Mit dem Kragen 37 kann das erfindungsgemäße Tauwasserablaufventil dieser Ausführungsform z. B. auf einen Schlauch aufgesteckt werden, der das Ende eines Tauwasserablaufes bildet. Besonders günstig läßt sich diese Ausführungsform z. B. auf einen Schlauch aufstecken, der einen Innendurchmesser von 12 mm und einen Außendurchmesser von 16 mm aufweist. Durch den Wulst 43 wird eine Selbstklemmung an dem Schlauch möglich.

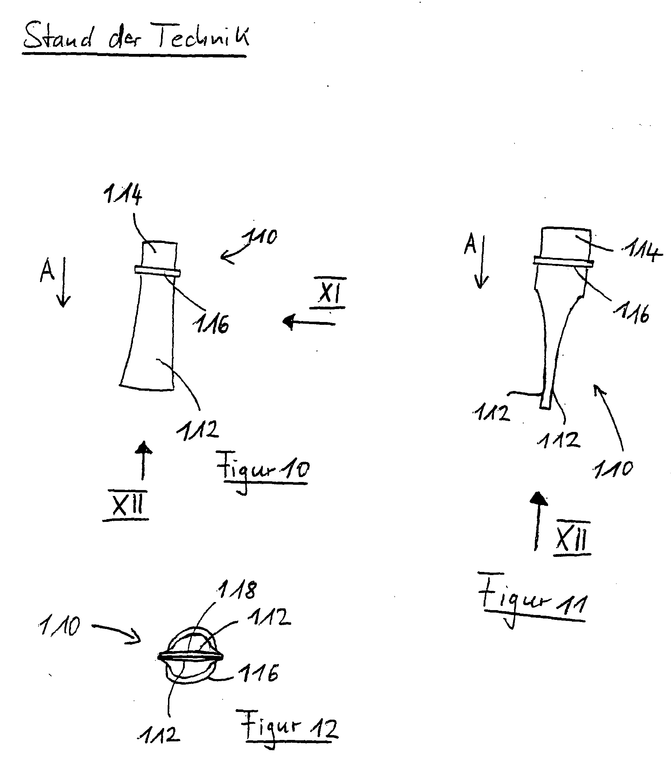

Figuren 8 und 9 zeigen eine dritte Ausführungsform mit einer etwa kegelstumpfförmigen Abschlußwand 52, die sich einerseits an einen schlauchförmigen Bereich 51 anschließt und andererseits in eine etwa halbkugelförmige Spitze mündet. Die Anordnung weist einen Schlitz 53 auf, dessen Ausdehnung 58 in Längsrichtung des schlauchförmigen Bereiches 51 größer ist als die Ausdehnung 61 der Abschlußwand 52 in dieser Richtung. Auch bei dieser Ausführungsform ist der Außendurchmesser 55 des schlauchförmigen Bereiches 51 zu 12 mm gewählt.

Figur 9 zeigt eine Draufsicht dieser Ausführungsform in der in Figur 8 mit IX bezeichneten Blickrichtung. Ähnlich wie z. B. für die erste Ausführungsform bereits beschrieben, kann das Tauwasserablaufventil dieser Ausführungsform mit dem oberen offenen Ende von unten auf ein nicht gezeigtes Tauwasserablaufrohr aufgesteckt werden und haftet durch Selbstklemmung.

Zum Beispiel während des Abtauvorganges sammelt sich durch das Tauwasserablaufrohr ablaufendes Wasser zunächst in dem erfindungsgemäßen Tauwasserablaufventil. Bei ausreichender Gewichtsbelastung öffnet sich der Schlitz 3, 53 bzw. die Schlitze 23 und 24 durch die Gewichtskraft des Tauwassers. Schwungartig fließt das angefallene Tauwasser nach unten ab. Mögliche Verunreinigungen werden sicher mit ausgespült. Ist das Tauwasser abgelaufen bzw. der Abtauvorgang beendet, schließt sich der Schlitz 3, 53 bzw. die Schlitze 23 und 24 automatisch aufgrund der elastischen Eigenschaften des Tauwasserablaufventils wieder. Ein Rückströmen von Gas oder Luft in umgekehrter Richtung nach oben wird auf diese Weise verhindert.

Die einzelnen Elemente der beispielhaft beschriebenen Ausführungsformen sind auch kombinierbar. So ist z. B. eine Ausführungsform möglich, die einen Kragen 37 aufweist, aber nur einen Schlitz in der Abschlußwand. Andererseits kann eine Ausführungsform mit zwei Schlitzen 23, 24 in der Abschlußwand selbstverständlich auch ohne einen Kragen 37 vorgesehen sein, wenn sie ausschließlich zum Aufstecken auf ein Tauwasserablaufrohr dienen soll.

Auch eine Ausführungsform mit einer kegelförmigen Abschlußwand kann einen zusätzlichen Kragen 37 aufweisen und/oder mit zwei z. B. kreuzförmig angeordneten Schlitzen in der Abschlußwand versehen sein.

## Patentansprüche

1. Tauwasserablaufventil für Kühl- und/oder Gefriergeräte, das
- aus elastischem Material besteht,
- einen schlauchförmigen Bereich umfaßt,
- zur Verbindung mit einem Tauwasserablauf an einem ersten, offenen Ende eine erste Öffnung umfaßt, und
- an einem zweiten Ende eine den Durchfluß steuernde zweite Öffnung aufweist,
**dadurch gekennzeichnet, daß**
- das zweite Ende durch eine mit dem schlauchförmigen Bereich (1, 21, 51) verbundene Abschlußwand (2, 22, 52) aus elastischem Material gebildet ist, und
- die zweite Öffnung durch zumindest einen Schlitz (3, 23, 24, 53) in der Abschlußwand (2, 22, 52) gebildet wird.

2. Tauwasserablaufventil nach Anspruch 1, **dadurch gekennzeichnet, daß** der schlauchförmige Bereich (1, 21, 51) und die Abschlußwand (2, 22, 52) aus einem Stück gefertigt sind.

3. Tauwasserablaufventil nach einem der Ansprüche 1 oder 2, **dadurch gekennzeichnet, daß** zwei Schlitze (23, 24) in der Abschlußwand (22) vorgesehen sind.

4. Tauwasserablaufventil nach Anspruch 3, **dadurch gekennzeichnet, daß** die zwei Schlitze (23, 24) aufeinander senkrecht stehen.

5. Tauwasserablaufventil nach einem der Ansprüche 1 bis 4, **dadurch gekennzeichnet, daß** zumindest zwei Schlitze (23, 24) unterschiedlicher Tiefe (28, 30) vorgesehen sind.

6. Tauwasserablaufventil nach einem der Ansprüche 1 bis 5, **dadurch gekennzeichnet, daß** zumindest ein Schlitz (23, 53) eine Tiefe (28, 58) hat, die größer ist als die Ausdehnung (31, 61) der Abschlußwand (22, 52) in einer Richtung parallel zur Längsausdehnung des schlauchförmigen Bereiches (21, 51).

7. Tauwasserablaufventil nach einem der Ansprüche 1 bis 6, **dadurch gekennzeichnet, daß** der schlauchförmige Bereich (1, 21, 51) zylinderförmig ist.

8. Tauwasserablaufventil nach einem der Ansprüche 1 bis 7, **dadurch gekennzeichnet, daß** die Abschlußwand (2, 22, 52) einen Bereich umfaßt, der eine geringere Wandstärke (9, 29) als der schlauchförmige Bereich (1, 21, 51) hat.

9. Tauwasserablaufventil nach einem der Ansprüche 1 bis 8, **dadurch gekennzeichnet, daß** die Abschlußwand (52) die Form eines Kegelstumpfes mit runder Spitze hat.

10. Tauwasserablaufventil nach einem der Ansprüche 1 bis 8, **dadurch gekennzeichnet, daß** die Abschlußwand (2, 22) halbkugelförmig ist.

11. Tauwasserablaufventil nach einem der Ansprüche 1 bis 10, **dadurch gekennzeichnet, daß** der zumindest eine Schlitz (3) in einer Richtung parallel zur Längsausdehnung des schlauchförmigen Bereiches (1) ausgebildet ist.

12. Kühl- und/oder Gefriergerät mit einem Tauwasserablaufventil nach einem der Ansprüche 1 bis 11.

13. Verwendung eines Elementes aus elastischem Material mit einem schlauchförmigen Bereich (1, 21, 51), einem ersten, offenen Ende zur Verbindung mit einem Rohr oder Schlauch, einem zweiten Ende mit einer mit dem schlauchförmigen Bereich einstückigen Abschlußwand (2, 22, 52) und zumindest einem Schlitz (3, 23, 24, 53) in der Abschlußwand (2, 22, 52), als Tauwasserablaufventil für ein Kühl- und/oder Gefriergerät.
